# EUROPÄISCHE PATENTSCHRIFT

(11) **EP 1 349 384 B1**
(45) Veröffentlichungstag und Bekanntmachung des Hinweises auf die Patenterteilung: **12.06.2013**
(21) Anmeldenummer: 03005878.8
(22) Anmeldetag: 15.03.2003
(51) Int. Cl.: H04N 5/44, G06F 9/445

(54) **Verfahren für die Verwaltung von Software für ein Fernsehgerät**
Method for management of software in a television apparatus
Procédé de gestion de logiciel dans un récepteur de télévision

(30) Priorität: 20.03.2002 DE 10212298
(43) Veröffentlichungstag der Anmeldung: 01.10.2003
(73) Patentinhaber: Grundig Multimedia AG, 6362 Stansstad (CH)
(72) Erfinder: Payer, Wolfgang, 94448 Emskirchen (DE); Finsterer, Harald, 90469 Nürnberg (DE)
(74) Vertreter: Louis Pöhlau Lohrentz

(56) Entgegenhaltungen:
- EP-A- 0 723 372
- EP-A2- 0 723 372
- DE-A- 19 721 786
- US-A- 5 640 248
- US-A1- 2001 020 263
- PATENT ABSTRACTS OF JAPAN vol. 017, no. 277 (P-1546), 27. Mai 1993 (1993-05-27) & JP 05 012026 A (MATSUSHITA ELECTRIC IND CO LTD), 22. Januar 1993 (1993-01-22)

## Beschreibung

Die vorliegende Erfindung betrifft ein Verfahren für die Verwaltung von Software für ein Fernsehgerät sowie ein nach diesem Verfahren betriebenes Fernsehgerät.

Heute hergestellte Fernsehgeräte sind in großem Umfang digitalisiert, d. h. wesentliche Bestandteile des Fernsehgeräts werden von digitalen Komponenten gebildet oder von digitalen Komponenten überwacht und gesteuert. Software wird bei derartigen Fernsehgeräten dazu verwendet, die einzelnen Komponenten zu steuern und so die gewünschten Funktionen des Fernsehgeräts zur Verfügung zu stellen.

Bei den bekannten Fernsehgeräten wird die Software in nichtflüchtigen Speichern gespeichert, z. B. PROM-, EPROM-, EEPROM- oder Flash-Speichern, die üblicherweise fest in das Fernsehgerät eingebaut. Um das Fernsehgerät für alle denkbaren Einsatzmöglichkeiten vorzubereiten, ist daher die gesamte Software in dem nichtflüchtigen Speicher gespeichert, die möglicherweise zu irgend einem Zeitpunkt benötigt werden könnte. Aus diesem Grund weisen die bekannten Fernsehgeräte ein nichtflüchtigen Speicher für die Speicherung und Verwaltung der für die Fernsehgräte benötigten Software auf, der eine sehr große Speicherkapazität haben muß, um die gesamte zur Verfügung stehende Software speichern zu können.

Aus DE 197 21 786 A1 ist ein Verfahren zum Betreiben eines Datenverarbeitungsgerätes, insbesondere eines Automatisierungsgerätes, mit flüchtigen und nicht flüchtigen Speichern bekannt. Die System- und/oder Anwendersoftware wird hierbei von einem nicht flüchtigen in einen flüchtigen Speicher kopiert. Um beim Einsatz von nicht flüchtigen Speicherelementen mit minimaler Speicherkapazität eine verbesserte Leistungsfähigkeit des Datenverarbeitungsgerätes zu erhalten, wird vorgeschlagen, dass die Systemsoftware in komprimierter Form in dem nicht flüchtigen Speicher abgelegt und nach einem Reset in Abhängigkeit eines Merkelementes dekomprimiert im flüchtigen Speicher abgelegt und dort gestartet wird und/oder dass der Anwendersoftware zugeordnete, Änderungen der Anwendersoftware enthaltene Dateien komprimiert im nichtflüchtigen Speicher abgelegt und zur Regeneration der Dateien im flüchtigen Speicher verwendet werden.

Aus WO 01/52065 A2 ist ein Verfahren und ein Gerät offenbart, um Anwendersoftware während eines Stromausfalles und eines Updates zu schützen. Hierzu wird der Softwarecode in einem Speicher gespeichert, um zu einem späteren Zeitpunkt, bei Wiedereintritt der elektrischen Spannung, regeneriert zu werden.

Aus DE 195 36 408 A1 ist ein Faksimilegerät bekannt. Das Faksimilegerät verwendet einen Speicher mit kleiner Speicherkapazität zum Speicher von Programmdaten, die für eine Wartungs- und Instandhaltungsfunktion hinterlegt sind. Eines der Wartungsprogramme wird entsprechend einer Anforderung durch einen Benutzer ausgewählt, um eine Wartungs-Servicefunktion entsprechend dem ausgewählten wartungsprogramm durchzuführen.

EP0723372 offenbart einen Tuner-Demodulator, CPU, Audio- und Video-Verarbeitung. Die CPU offenbart ein Speichermanagement mit flüchtigen und nicht flüchtigen (non-volatile) Speichern wie EEPROM, ROM, RAM. Es werden komprimierte Daten verwendet um Software Upgrades in einem Fernsehempfänger zu installieren vor dem Hintergrund begrenzten Speicherplatzes. Entweder der Benutzer selbst oder die CPU löscht unbenutzte Programme.

Es ist daher die Aufgabe der vorliegenden Erfindung, ein Verfahren für die Verwaltung von Software sowie ein nach diesem Verfahren betriebenes Fernsehgerät anzugeben, das für alle denkbaren Einsatzmöglichkeiten brauchbar ist, bei dem aber der für die Speicherung der dazu benötigten Software verwendete nichtflüchtige Speicher stark verkleinert werden kann.

Bei der vorliegenden Erfindung wird diese Aufgabe durch die Merkmale der Ansprüche 1 und 6 gelöst.

Bei dem Verfahren für die Verwaltung von Software sowie dem nach diesem Verfahren betriebenen Fernsehgerät wird dabei von der Überlegung ausgegangen, daß ein Teil der in einem nichtflüchtigen Speicher gespeicherten Software als ausführbare Softwaremodule gespeichert ist, und daß ein weiterer Teil der Software als komprimierte Softwaremodule in dem nichtflüchtigen Speicher gespeichert ist.

Der Vorteil der Erfindung ist darin zu sehen, daß nur solche die Softwaremodule in dekomprimierter Form, d. h. in ausführbarer Form, in dem nichtflüchtigen Speicher gespeichert werden, die für den Betrieb des Fernsehgeräts üblicherweise erforderlich oder erwünscht sind. Weitere zur Verfügung stehende Softwaremodule liegen nur in komprimierter Form vor, so daß sie vor einer Ausführung dekomprimiert werden müssen. Da dies aber nur selten vorkommt, da alle für den Betrieb üblicherweise erforderlichen oder erwünschten Softwaremodule in ausführbarer Form vorliegen, kann dies akzeptiert werden. Dadurch ergibt sich eine erhebliche Reduzierung des Speicherbedarfs, so daß der nichtflüchtige Speicher verkleinert werden kann, wodurch sich eine Kostenersparnis ergibt. Wird der nichtflüchtige Speicher nicht verkleinert, kann die frei gewordene Speicherkapazität dazu verwendet werden, Funktionen wie Videotext zu verbessern, die dann auf diese Speicherkapazität zugreifen können.

Weitere Vorteile der vorliegenden Erfindung ergeben sich aus den abhängigen Ansprüchen sowie der nachfolgenden Beschreibung einer Ausführungsform eines erfindungsgemäßen Fernsehgeräts anhand von Figuren.

Es zeigt:
- Figur 1: ein Prinzipschaltbild einer Ausführungsform eines Fernsehgeräts, welches eine Verwaltung von für seinen Betrieb erforderlicher Software erlaubt,
- Figur 2: eine mögliche Aufteilung eines nichtflüchtigen Speichers des Fernsehgeräts nach Figur 1, zur Verwaltung der Software, und
- Figur 3: eine mögliche Änderung der Aufteilung des nichtflüchtigen Speichers nach Figur 2.

Zur Erleichterung des Verständnisses der vorliegenden Erfindung sind in den Figuren nur die Bestandteile der Ausführungsform dargestellt, die im Zusammenhang mit der Erfindung von Bedeutung sind.

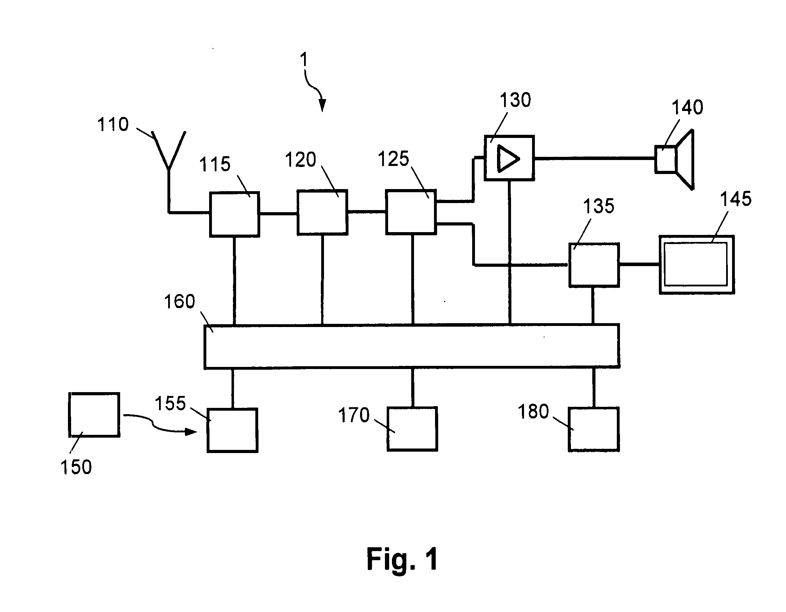

In Figur 1 ist ein Prinzipschaltbild einer Ausführungsform eines Fernsehgeräts dargestellt, welches eine Verwaltung von für seinen Betrieb erforderlicher Software erlaubt.

Das Fernsehgerät 1 weist einen Signaleingang 110, beispielsweise eine Antenne, einen Tuner 115 und eine Zwischenfrequenzstufe 120 auf, um z. B. ein Fernsehsignal eines bestimmten Senders empfangen zu können. Das empfangene Fernsehsignal wird von einer Signalverarbeitungsschaltung 125 aufbereitet, so daß an Ausgängen der Signalverarbeitungsschaltung 125 ein Audiosignal und ein Videosignal zur Verfügung stehen. Das Audiosignal wird von einem Leistungsverstärker 130 verstärkt und von einem Lautsprecher 140 in ein akustisches Signal gewandelt. Das Videosignal wird von einer Videosignalverarbeitungsschaltung 135 für die Wiedergabe mittels einer Anzeige 145 aufbereitet.

Für die Bedienung des Fernsehgeräts 1 ist eine Bedieneinheit 150, 155 vorgesehen, die z. B. aus einem Fernbedienungsgeber 150 und einem an eine Steuereinrichtung 160 angeschlossenen Fernbedienungsempfänger 155 bestehen kann. Fernbedienungsgeber 150 und Fernbedienungsempfänger 155 können drahtlos miteinander verbunden sein, z. B. über infrarote Signale. Mittels des Fernbedienungsgebers 150 können alle Funktionen des Fernsehgeräts 1 gesteuert werden, z. B. die Auswahl eines bestimmten wiederzugebenden Senders.

Die Bestandteile 115 bis 155 des Fernsehgeräts 1 werden von der Steuereinheit 160, z. B. einem Mikroprozessor, gesteuert und überwacht. Für den Betrieb des Mikroprozessors 160, d. h. für die Steuerung und Überwachung der Bestandteile 115 bis 155 des Fernsehgeräts 1, ist eine Software in einem Speicher 180 gespeichert. Der Speicher 180 ist ein nichtflüchtiger Speicher, z. B. EEPORModer Flash-Speicher, d. h. der nichtflüchtige Speicher 180 ist elektrisch löschbar bzw. beschreibbar. Für den Betrieb kann ein zusätzlicher Arbeitsspeicher 170, z. B. ein RAM-Speicher, vorgesehen sein. Die Software oder Teile davon werden dann für den Betrieb, d. h. zur Ausführung durch die Steuereinheit 160, aus dem nichtflüchtigen Speicher 180 in den Arbeitsspeicher 170 geladen.

Unter dem im Zusammenhang mit der Beschreibung der Ausführungsbeispiele verwendeten Begriff Software ist Software zu verstehen, die ausführbare Programme für die Steuereinheit 160 bildet. Software kann aber auch Daten umfassen, die beim Betrieb des Fernsehgeräts 1 benötigt werden, wie z. B. Anweisungen oder Kommentare für einen Benutzer des Fernsehgeräts 1, die z. B. auf der Anzeige 145 dargestellt werden. Diese Anweisungen oder Kommentare können auch in unterschiedlichen Sprachen zur Verfügung stehen, so daß der Benutzer die von ihm bevorzugte Sprache auswählen kann.

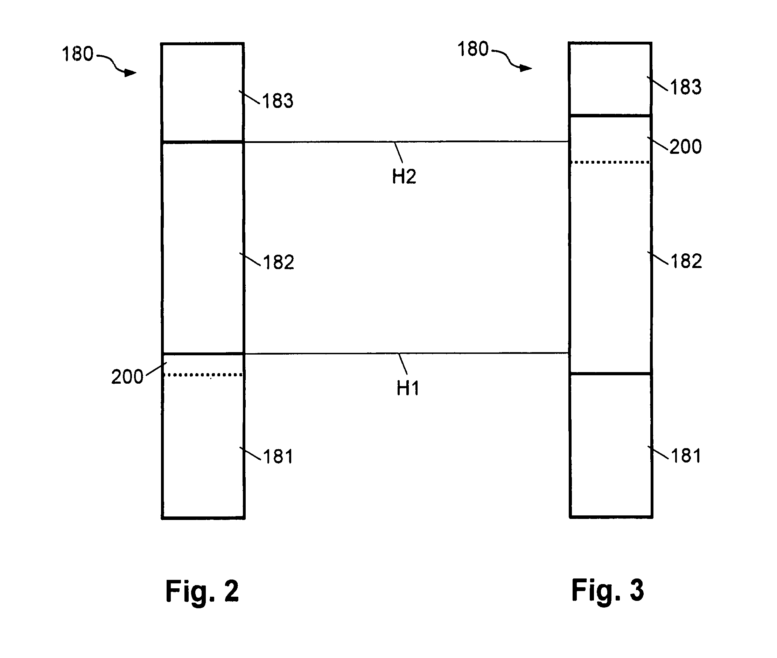

In Figur 2 ist eine mögliche Aufteilung des nichtflüchtigen Speichers 180 des Fernsehgeräts nach Figur 1 dargestellt, zur Verwaltung der Software.

Der nichtflüchtige Speicher 180 ist in drei Bereiche unterteilt, wobei ein erster Bereich 181 komprimierte Software enthält, d. h. Software, die zur Einsparung von Speicherplatz verdichtet wurde. Dies führt allerdings dazu, daß die derart behandelte Software nicht durch die Steuereinheit 160 ausgeführt werden kann, ohne zuvor dekomprimiert zu werden. Ein zweiter Bereich 182 des nichtflüchtigen Speichers 180 enthält nichtkomprimierte Software, d. h. Software die durch die Steuereinheit 160 ausgeführt werden kann. Ein dritter Bereich 183 des nichtflüchtigen Speichers 180 ist frei, d. h. in dem dritten Bereich 183 befindet sich keine Software, so daß der dritte Bereich 183 des nichtflüchtigen Speichers 180 während des Betriebs des Fernsehgeräts 1 durch die Steuereinheit 160 beschrieben werden kann.

Die im zweiten Bereich 182 des nichtflüchtigen Speichers 180 gespeicherte Software umfaßt zu Beginn, d. h. beispielsweise bei Auslieferung des Fernsehgeräts 1, Softwaremodule, die für das Funktionieren des Fernsehgeräts 1 mindestens erforderlich sind. Unter Softwaremodulen sind dabei Programmteile zu verstehen, die für die Realisierung einzelner Funktionen benötigt werden, z. B. die Auswahl eines Senders, die Veränderung von Lautstärke, Helligkeit, Kontrast usw. Außerdem gehören dazu Programmteile, die zur oben beschriebenen Steuerung, Regelung und Überwachung der vorhandenen Bestandteile 115 bis 155 des Fernsehgeräts 1 durch die Steuereinheit 160 benötigt werden. Ebenso ist mindestens ein Satz der oben erwähnten Daten für den Betrieb des Fernsehgeräts 1 im zweiten Bereich 182 des nichtflüchtigen Speichers 180 enthalten, z. B. Anweisungen oder Kommentare für den Benutzer des Fernsehgeräts 1, in zumindest einer Sprache, beispielsweise der Sprache des Landes in welches das Fernsehgerät 1 ausgeliefert werden soll.

Weitere Software, die nicht unbedingt für den Betrieb des Fernsehgeräts 1 erforderlich ist, wird in komprimierter Form im ersten Bereich 181 des nichtflüchtigen Speichers 180 gespeichert. Die komprimierte Software kann dabei z. B. Softwaremodule umfassen, die für die Bedienung weitergehender Funktionen des Fernsehgeräts 1 benötigt werden, wie Videotext, Electronic Progam Guide usw. Ebenso können Softwaremodule im ersten Bereich 181 des nichtflüchtigen Speichers 180 gespeichert sein, die zur Steuerung, Regelung und Überwachung von nachrüstbaren Bestandteilen des Fernsehgeräts 1 durch die Steuereinheit 160 benötigt werden. Weiterhin können Softwaremodule im ersten Bereich 181 des nichtflüchtigen Speichers 180 gespeichert sein, die Daten in weiteren Sprachen für die Bedienung des Fernsehgeräts 1, mittels der erwähnten Anweisungen oder Kommentare, umfassen.

Wird während des Betriebs des Fernsehgeräts 1 eine nur komprimiert vorliegende Funktion mittels des Fernbedienungsgebers 150 aufgerufen, das Fernsehgerät 1 um einen Bestandteil erweitert, z. B. einen Videotext-Decoder, oder statt der voreingestellten Sprache für die Bedienung des Fernsehgeräts 1 eine andere Sprache ausgewählt, werden das oder die entsprechenden komprimierten Softwaremodule durch die Steuereinheit 160 aus dem ersten Bereich 181 des nichtflüchtigen Speichers 180 gelesen und dekomprimiert. Dies kann beispielsweise unter Einbeziehung des Arbeitsspeichers 170 erfolgen. Das oder die dekomprimierten Softwaremodule können danach in den freien, ersten Speicherbereich 181 des nichtflüchtigen Speichers 180 geschrieben werden, damit sie für den weiteren Betrieb des Fernsehgeräts 1 zur Verfügung stehen. Der dadurch beschriebene Teilbereich des freien, ersten Speicherbereichs 181 des nichtflüchtigen Speichers 180 wird danach Bestandteil des zweiten Bereichs 182 des nichtflüchtigen Speichers 180, der die ausführbare Software enthält. Die Abspeicherung des oder der dekomprimierten Softwaremodule kann aber auch unterbleiben. In diesem Fall gehen die im Arbeitsspeicher 170 gespeicherten dekomprimierten Softwaremodule aber z. B. beim Ausschalten des Fernsehgeräts 1 verloren, so daß sie vor einer Ausführung durch die Steuereinheit 160 erneut dekomprimiert werden müssen.

In den Figuren 2 und 3 ist eine derartige Veränderung der Belegung des nichtflüchtigen Speichers 180 dargestellt. Ein ursprünglich komprimiertes Softwaremodul 200 im ersten Bereich 181 des nichtflüchtigen Speichers 180 (Figur 2) wird nach seiner Dekomprimierung gelöscht. Dadurch verringert sich der durch den ersten Bereich 181 belegte Speicherplatz im nichtflüchtigen Speicher 180 (Figur 3), wie durch Hilfslinie H1 verdeutlicht. Das dekomprimierte und ausführbare Softwaremodul 200', dessen Speicherbedarf sich durch die Dekomprimierung vergrößert hat, vergrößert insgesamt den Speicherbedarf des zweiten Bereichs 182 im nichtflüchtigen Speicher 180, der nunmehr auch einen Teil des freien, dritten Bereichs 183 umfaßt, der dadurch verringert wurde, wie durch Hilfslinie H2 verdeutlicht.

Neben der oben beschriebenen Verwaltung des nichtflüchtigen Speichers 180 bei der Dekomprimierung von Softwaremodulen kann es auch vorgesehen sein, daß komprimierte Softwaremodule nach ihrer Dekomprimierung nicht aus dem ersten Bereich 181 des nichtflüchtigen Speichers 180 gelöscht werden. Die dekomprimierten Softwaremodule werden dann ausschließlich in den freien, dritten Bereich 183 des nichtflüchtigen Speichers geschrieben. Außerdem kann es vorgesehen sein, daß nach dem Löschen von komprimierten Softwaremodulen 200, nachdem diese dekomprimiert wurden, nicht zu der in der Figur 3 dargestellten Veränderung der Speicherbelegung kommt, d. h. der zweite Bereich 182 wird nicht wie dargestellt insgesamt in den ersten Bereich 181 verschoben. Statt dessen werden durch die Löschung des komprimierten Softwaremoduls 200 frei gewordene Teilbereiche des ersten Bereichs 181 des nichtflüchtigen Speichers 180 z. B. mittels einer Tabelle, die z. B. am Anfang des freien, dritten Bereichs 183 geführt wird, verwaltet. In diese in der Tabelle als frei gekennzeichneten Teilbereiche des ersten Bereichs 181 des nichtflüchtigen Speichers 180 können dann dekomprimierten Softwaremodule 200', oder Teile davon, gespeichert werden.

Wurden Softwaremodule aus dem nichtflüchtigen Speicher 180 gelöscht, können diese zu einem späteren Zeitpunkt mittels einer geeigneten Schnittstelle geladen und erneut im nichtflüchtigen Speicher 180 gespeichert werden. Beispielsweise kann dazu ein Internet-Anschluß verwendet werden, der Bestandteil des Fernsehgeräts 1 ist. Über den Internet-Anschluß können dann die gewünschten Softwaremodule aus einer Datenbank des Herstellers des Fernsehgeräts 1 geladen und im nichtflüchtigen Speicher 180 gespeichert werden.

Es kann auch vorgesehen sein, daß einige oder alle der komprimierten Softwaremodule in geschützter Form im ersten Bereich 181 des nichtflüchtigen Speichers 180 gespeichert sind. Zu ihrer Dekomprimierung ist dann beispielsweise ein Paßwort erforderlich. Auf diese Weise kann unberechtigter Gebrauch der Softwaremodule verhindert werden oder ein Gebrauch nur gegen die Erstattung einer Gebühr gestattet werden.

Zur Verwaltung der Softwaremodule kann es neben der beschriebenen Vorgehensweise, bei der nur die für den Betrieb des Fernsehgeräts 1 unbedingt erforderlichen Softwaremodule in ausführbarer Form im zweiten Bereich 182 des nichtflüchtigen Speichers 180 vorliegen, vorgesehen sein, weitere Softwaremodule, die beispielsweise häufig genutzte Funktionen darstellen, ebenfalls in dekomprimierter Form, d. h. als ausführbare Software, im zweiten Bereich 182 des nichtflüchtigen Speichers 182 zu speichern.

Die Verwaltung der Softwaremodule kann bei der Inbetriebnahme des Fernsehgeräts 1 erfolgen. Der Benutzer oder der Verkäufer des Fernsehgeräts 1 wählen dann bei der Inbetriebnahme die komprimierten Softwaremodule aus, die dekomprimiert werden sollen, damit sie für eine spätere Benutzung sofort zur Verfügung stehen. Diese werden dann dekomprimiert und in den zweiten Bereich 182 des nichtflüchtigen Speichers 180 geschrieben. Gleichzeitig oder anschließend werden die entsprechenden komprimierten Softwaremodule gelöscht, um den verfügbaren freien Speicher zu vergrößern. Zusätzlich kann es vorgesehen sein, daß, zur weiteren Vergrößerung des verfügbaren freien Speichers auch einige oder alle anderen komprimierten Softwaremodule gelöscht werden. Steht ausreichend Speicherplatz im nichtflüchtigen Speicher 180 zur Verfügung, kann selbstverständlich auf eine teilweise oder vollständige Löschung der komprimierten Softwaremodule verzichtet werden.

Die soeben für die Inbetriebnahme des Fernsehgeräts 1 beschriebene Verwaltung der Softwaremodule kann selbstverständlich jederzeit während des späteren Betriebs des Fernsehgeräts 1 wiederholt werden, falls eine Veränderung der im zweiten Bereich 182 des nichtflüchtigen Speichers 180 zur Verfügung stehenden Softwaremodule erforderlich ist.

Bei einer weiteren Vorgehensweise zur Verwaltung der Softwaremodule kann es vorgesehen sein, daß das Verhalten des Benutzers protokolliert wird. Dabei wird ein Protokoll erstellt, das darüber Auskunft gibt, wie häufig bestimmte Softwaremodule bei dem Betrieb des Fernsehgeräts 1 durch den Benutzer benötigt werden. Werden bestimmte Softwaremodule, die nur in komprimierter Form im ersten Bereich 181 des nichtflüchtigen Speichers 180 vorliegen, häufiger benutzt, können diese automatisch in dekomprimierter Form in den zweiten Bereich 182 des nichtflüchtigen Speichers 180 geschrieben werden, damit zukünftig die Dekomprimierung entfallen kann. Ebenso ist es auf der Grundlage einer Auswertung des Protokolls möglich, dekomprimierte Softwaremodule aus dem zweiten Bereich 182 des Speichers 180 automatisch zu entfernen, falls diese nur selten oder nie verwendet werden.

Abweichend von den beschriebenen Ausführungsformen ist eine Vielzahl von Abwandlungen möglich.

Die Steuereinheit 160 kann auch von einem digitalen Signalprozessor gebildet werden bzw. es kann zusätzlich zur Steuereinheit 160 ein digitaler Signalprozessor vorhanden sein, der Teile der Signalaufbereitung übernimmt. Dann kann auch Software für die Signalaufbereitung durch den digitalen Signalprozessor wie beschrieben verwaltet werden.

Um Bauteile einsparen zu können, kann es auch vorgesehen sein, daß das Fernsehgerät 1 keinen Arbeitsspeicher 170 aufweist. In diesem Fall dient der nichtflüchtige Speicher 180 als Arbeitsspeicher. Die Software wird dann von der Steuereinheit 160 direkt aus dem nichtflüchtigen Speicher 180 zur Ausführung geladen. Daten, die während des Betriebs durch die Speichereinheit 160 gespeichert werden müssen, werden direkt in den freien, dritten Bereich 183 des nichtflüchtigen Speichers 180 geschrieben. Für diesen Fall ist es selbstverständlich, daß für den Betrieb des Fernsehgeräts 1 ein nichtflüchtiger Speicher 180 vorhanden sein muß, der ausreichend schnelle Lese- und Schreibvorgänge erlaubt, z. B. ein Flash-Speicher.

Um die Flexibilität der Verwaltung der Software weiter zu erhöhen, kann es auch vorgesehen sein, daß alle Softwaremodule in komprimierter Form im nichtflüchtigen Speicher 180 gespeichert sind. D. h. auch die Softwaremodule, die in dekomprimierter Form im Speicher 180 gespeichert sind, werden zusätzlich in komprimierter Form vorgehalten. Dies erlaubt es, falls entsprechende dekomprimierte Softwaremodule einmal gelöscht worden sein sollten, auf die entsprechenden komprimierten Softwaremodule zurückzugreifen, so daß die Funktionen der gelöschten Softwaremodule noch verfügbar sind.

## Patentansprüche

1. Verfahren zur Verwaltung von Software für den Betrieb einer Steuereinheit (160) eines Fernsehgeräts (1), wobei das Fernsehgerät (1) ferner einen Signaleingang (110), einen Tuner (115) und eine Zwischenfrequenzstufe (120) aufweist, um ein Fernsehsignal eines bestimmten Senders empfangen zu können, wobei das empfangene Fernsehsignal von einer Signalverarbeitungsschaltung (125) aufbereitet wird, so dass an Ausgängen von selbiger ein Audiosignal und ein Videosignal zur Verfügung stehen, wobei das Audiosignal von einem Leistungsverstärker (130) verstärkt wird und von einem Lautsprecher (140) in ein akustisches Signal verwandelt wird, und wobei das Videosignal von einer Videosignalverarbeitungsschaltung (135) für die Wiedergabe mittels einer Anzeige (145) aufbereitet wird, und wobei die Bedienung des Fernsehgeräts (1) dieses einen Fernbedienungsempfänger (155) aufweist, und wobei das Fernsehgerät (1) ferner einen nichtflüchtigen Speicher (180) umfasst, in dem mehrere Softwaremodule (181, 182) der Software gespeichert sind, wobei ein Teil der Softwaremodule für die Steuerung und Überwachung des Tuners (115), der Zwischenfrequenzstufe (120), der Signalverarbeitungsschaltung (125), des Leistungsverstärkers (130), des Lautsprechers (140), der Videosignalverarbeitungsschaltung (135), der Anzeige (145) und des Fernbedienungsempfängers (155) dient, und ein anderer Teil der Softwaremodule für weitere Funktionen des Fernsehgeräts (1) und/oder zur Steuerung, Regelung und Überwachung von nachrüstbaren Bestandteilen des Fernsehgeräts (1) dient,
**dadurch gekennzeichnet, dass**
ein erster Teil der in dem nichtflüchtigen Speicher gespeicherten Softwaremodule als durch die Steuereinheit (160) ausführbare Softwaremodule und ein zweiter Teil der Softwaremodule als komprimierte Softwaremodule, die erst nach einem Dekomprimieren durch die Steuereinheit ausführbar sind, in dem nichtflüchtigen Speicher gespeichert sind, wobei sowohl die ausführbaren Softwaremodule (182) genutzt werden als auch komprimierte Softwaremodule (181) dekomprimiert und genutzt werden, und wobei ein Protokoll über die Häufigkeit der Nutzung der ausführbaren Softwaremodule (182) und das Dekomprimieren und die Nutzung der komprimierten Softwaremodule (181) erstellt wird, und wobei
a) komprimierte Softwaremodule (181), die nach einem vorbestimmten Kriterium als häufiger dekomprimiert und genutzt erfasst werden, in dekomprimierter Form in den nichtflüchtigen Speicher gespeichert werden, und/oder
b) ausführbare Softwaremodule (182), die nach einem vorbestimmten Kriterium als selten oder nie genutzt erfasst werden, aus dem nichtflüchtigen Speicher (180) gelöscht werden.

2. Verfahren nach Anspruch 1,
**dadurch gekennzeichnet, dass**
eines oder mehrere komprimierte Softwaremodule (181) ausgewählt werden, dass das oder die komprimierten Softwaremodule (181) dekomprimiert werden und dass das oder die dekomprimierten Softwaremodule als ausführbare Softwaremodule (182) im nicht flüchtigen Speicher (180) gespeichert werden.

3. Verfahren nach Anspruch 2
**dadurch gekennzeichnet, dass**
das oder die komprimierten Softwaremodule (181) von einem Benutzer oder einem Händler des Fernsehgerätes (1) ausgewählt werden und/oder das oder die komprimierten Softwaremodule (181) gelöscht werden, die als dekomprimierte und ausführbare Softwaremodule (182) im nicht flüchtigen Speicher (180) gespeichert worden sind.

4. Verfahren nach Anspruch 3
**dadurch gekennzeichnet, dass**
sämtliche komprimierten Softwaremodule (181) aus dem nicht flüchtigen Speicher (180) gelöscht werden.

5. Verfahren nach einem der vorangehenden Ansprüche
**dadurch gekennzeichnet, dass**
komprimierte Softwaremodule (181) über eine Schnittstelle in den nicht flüchtigen Speicher (180) geschrieben werden.

6. Fernsehgerät mit einem Signaleingang (110), einem Tuner (115) und einer Zwischenfrequenzstufe (120), durch die ein Fernsehsignal eines bestimmten Senders empfangbar ist, mit einer Signalverarbeitungsschaltung (125) zum Aufbereiten eines solchen Fernsehsignals, damit an den Ausgängen der Signalverarbeitungsschaltung (125), ein Audiosignal und ein Videosignal zur Verfügung stehen, mit einem Leistungsverstärker (130) zum Verstärken des Audiosignals und einem Lautsprecher (140) zum Wandeln des verstärkten Audiosignals in ein akustisches Signal, mit einer Videosignalverarbeitungsschaltung (135) für das Aufbereiten des Videosignals und eine Anzeige (145) für die Wiedergabe des aufbereiteten Videosignals, und mit einem Fernbedienungsempfänger (155) für die Bedienung des Fernsehgerätes 1, und wobei für das Fernsehgerätes (1) eine Steuereinheit (160) umfasst und einen nicht flüchtigen Speicher (180) umfasst, in dem mehrere Softwaremodule (181, 182) von Software gespeichert sind, wobei ein Teil der Softwaremodule für die Steuerung und Überwachung des Tuners (115), der Zwischenfrequenzstufe (120), der Signalverarbeitungsschaltung (125), des Leistungsverstärkers (130), des Lautsprechers (140), der Videosignalverarbeitungsschaltung (135), der Anzeige (145) und des Fernbedienungsempfängers (155) durch die Steuereinheit (160) dient, und ein anderer Teil der Softwaremodule für weitere Funktionen des Fernsehgeräts (1) und/oder zur Steuerung, Regelung und Überwachung von nachrüstbaren Bestandteilen des Fernsehgeräts (1) dient,
**dadurch gekennzeichnet, dass**
ein erster Teil der in dem nichtflüchtigen Speicher (180) gespeicherten Softwaremodule (181, 182) als durch die Steuereinheit (160) ausführbare Softwaremodule und ein zweiter Teil der Softwaremodule als komprimierte Softwaremodule, die erst nach einem Dekomprimieren durch die Steuereinheit ausführbar sind, in dem nichtflüchtigen Speicher gespeichert sind, wobei in dem Fernsehgerät (1) vorgesehen ist, dass ein Protokoll über die Häufigkeit der Nutzung der ausführbaren Softwaremodule (182) und das Dekomprimieren und die Nutzung der komprimierten Softwaremodule (181) erstellt wird, und wobei in dem Fernsehgerät (1) ferner vorgesehen ist, dass
a) komprimierte Softwaremodule (181), die nach einem vorbestimmten Kriterium als häufiger dekomprimiert und genutzt erfasst werden, in dekomprimierter Form in den nicht flüchtigen Speicher gespeichert werden, und/oder
b) dass ausführbare Softwaremodule (182), die nach einem vorbestimmten Kriterium als selten oder nie genutzt erfasst werden, aus dem nicht flüchtigen Speicher (180) gelöscht werden.

7. Fernsehgerät nach Anspruch 6,
**dadurch gekennzeichnet dass**,
der nicht flüchtige Speicher (180) ein Festspeicher ist.

8. Fernsehgerät nach Anspruch 6 oder 7,
**dadurch gekennzeichnet dass**,
die im nicht flüchtigen Speicher (180) gespeicherte Software auch Daten für den Betrieb des Fernsehgerätes enthält und/oder auch Anweisungen oder Kommentare für einen Benutzer des Fernsehgerätes umfassen.

## Claims

1. Method for managing software for the operation of a control unit (160) of a television apparatus (1), wherein the television apparatus (1) also has a signal input (110), a tuner (115) and an intermediate frequency stage (120) in order to be able to receive a television signal of a specific station, wherein the received television signal is processed by a signal processing circuit (125), such that an audio signal and a video signal are present at outputs of the same, wherein the audio signal is amplified by a power amplifier (130) and is converted to an acoustic signal by a loudspeaker (140), and wherein the video signal is processed by a video signal processing circuit (135) for playback by means of a display (145), and wherein this has a remote-controlled receiver (155) for the handling of the television apparatus (1), and wherein the television apparatus (1) furthermore comprises a non-volatile storage unit (180), in which several software modules (181, 182) of the software are stored, wherein a part of the software module serves for the control and monitoring of the tuner (115), the intermediate frequency stage (120), the signal processing circuit (125), the power amplifier (130), the loudspeaker (140), the video signal processing circuit (135), the display (145) and the remote-controlled receiver (155), and another part of the software module serves for further functions of the television apparatus (1) and/or for the control, regulation and monitoring of retrofit components of the television apparatus (1),
**characterised in that**,
a first part of the software module stored in the non-volatile storage unit is stored in the non-volatile storage unit as software modules that are executable by the control unit (160) and a second part of the software module is stored in the non-volatile storage unit as compressed software modules that can only be executed after decompression by the control unit, wherein both the executable software modules (182) are used and the compressed software modules (181) are decompressed and used, and wherein a protocol regarding the frequency of use of the executable software modules (182) and the decompression and use of the compressed software modules (181) is produced, and wherein
a) compressed software modules (181) that are detected as being decompressed and used frequently according to a predetermined criterion are stored in decompressed form in the non-volatile storage unit, and/or
b) executable software modules (182) that are detected as being used seldom or never according to a predetermined criterion are erased from the non-volatile storage unit (180).

2. Method according to claim 1,
**characterised in that**
one or more compressed software modules (181) are selected, the compressed software module(s) (181) is/are decompressed and the decompressed software module(s) is/are stored as executable software modules (182) in the non-volatile storage unit (180).

3. Method according to claim 2,
**characterised in that**,
the compressed software module(s) (181) is/are selected by a user or handler of the television apparatus (1) and/or the compressed software module(s) (181) that has/have been stored as decompressed and executable software modules (182) in the non-volatile storage unit (180) is/are erased.

4. Method according to claim 3,
**characterised in that**,
all compressed software modules (181) are erased from the non-volatile storage unit (180).

5. Method according to one of the preceding claims,
**characterised in that**,
compressed software modules (181) are written into the non-volatile storage unit (180) via an interface.

6. Television apparatus having a signal input (110), a tuner (115) and an intermediate frequency stage (120), with which a television signal of a specific station can be received, having a signal processing circuit (125) for processing such a television signal, with an audio signal and a video signal being present at the outputs of the signal processing circuit (125), having a power amplifier (130) for amplifying the audio signal and a loudspeaker (140) for converting the amplified audio signal into an acoustic signal, having a video signal processing circuit (135) to process the video signal and a display (145) for the playback of the processed video signal, and having a remote-controlled receiver (155) for the handling of the television apparatus (1), and wherein it comprises a control unit (160) and a non-volatile storage unit (180) for the television apparatus (1), in which several software modules (181, 182) of software are stored, wherein a part of the software module serves for the control and monitoring of the tuner (115), the intermediate frequency stage (120), the signal processing circuit (125), the power amplifier (130), the loudspeaker (140), the video signal processing circuit (135), the display (145) and the remote-controlled receiver (155) through the control unit, and another part of the software module serves for further functions of the television apparatus (1) and/or for the control, regulation and monitoring of retrofit components of the television apparatus (1),
**characterised in that**,
a first part of the software module (181, 182) stored in the non-volatile storage unit (180) is stored in the non-volatile storage unit as software modules that are executable by the control unit (160) and a second part of the software module is stored in the non-volatile storage unit as compressed software modules that can only be executed after decompression by the control unit, wherein provision is made in the television apparatus (1) for a protocol regarding the frequency of use of the executable software modules (182) and the decompression and use of the compressed software modules (181) to be produced, and wherein it is furthermore provided in the television apparatus (1) that
a) compressed software modules (181) that are detected as being decompressed and used frequently according to a predetermined criterion are stored in decompressed form in the non-volatile storage unit, and/or
b) executable software modules (182) that are detected as being used seldom or never according to a predetermined criterion are erased from the non-volatile storage unit (180).

7. Television apparatus according to claim 6,
**characterised in that**,
the non-volatile storage unit (180) is a permanent storage unit.

8. Television apparatus according to claim 6 or 7,
**characterised in that**,
the software stored in the non-volatile storage unit (180) also contains data for the operation of the television apparatus and/or comprises commands or comments for a user of the television apparatus.

## Revendications

1. Procédé de gestion de logiciels pour l'exploitation d'une unité de commande (160) d'un appareil de télévision (1), l'appareil de télévision (1) comprenant en outre une entrée de signal (110), un tuner (115) et un étage de fréquence intermédiaire (120) afin de pouvoir recevoir un signal de télévision d'un émetteur déterminé, le signal de télévision reçu étant traité par un circuit de traitement des signaux (125), de façon à ce qu'à des sorties de ce circuit, un signal audio et un signal vidéo sont disponibles, le signal audio étant amplifié par un amplificateur de puissance (130) et étant converti par un haut-parleur (140) en un signal acoustique et le signal vidéo étant traité par un circuit de traitement des signaux vidéo (135) pour la reproduction à l'aide d'un affichage (145) et l'utilisation de l'appareil de télévision (1) comprenant un récepteur de télécommande (155) et l'appareil de télévision (1) comprenant en outre une mémoire non volatile (180) dans laquelle plusieurs modules (181, 182) du logiciel sont enregistrés, une partie des modules logiciels servant à la commande et à la surveillance du tuner (115), de l'étage de fréquence intermédiaire (120), du circuit de traitement des signaux (125), de l'amplificateur de puissance (130), du haut-parleur (140), du circuit de traitement des signaux vidéo (135), de l'affichage (145) et du récepteur de télécommande (155) et une autre partie des modules logiciels servant à d'autres fonctions de l'appareil de télévision (1) et/ou à la commande, à la régulation et à la surveillance de composants pouvant être ajoutés à l'appareil de télévision (1),
**caractérisé en ce qu'**une première partie des modules logiciels enregistrés dans la mémoire non volatile sont enregistrés comme des modules logiciels exécutables par l'unité de commande (160) et une deuxième partie des modules logiciels sont enregistrés comme des modules logiciels comprimés pouvant être exécutés uniquement après une décompression par l'unité de commande, les modules logiciels exécutables (182) étant utilisés et les modules logiciels comprimés (181) étant décomprimés et utilisés, et un protocole étant établi en ce qui concerne la fréquence d'utilisation des modules logiciels exécutables (182) et la décompression et l'utilisation des modules logiciels comprimés (181) et
a) les modules logiciels comprimés (181), qui sont détectés comme comprimés et utilisés plus souvent selon un critère prédéterminé, étant enregistrés sous forme décomprimée dans la mémoire non volatile, et/ou
b) les modules logiciels exécutable (182), qui sont détectés comme utilisés rarement ou jamais selon un critère prédéterminée, étant effacés de la mémoire non volatile (180).

2. Procédé selon la revendication 1,
**caractérisé en ce que** un ou plusieurs modules logiciels comprimés (181) sont sélectionnés, **en ce que** le ou les modules logiciels comprimés (181) sont décomprimés et **en ce que** le ou les modules logiciels décomprimés sont enregistrés dans la mémoire non volatile (180) en tant que modules logiciels exécutable (182).

3. Procédé selon la revendication 1,
**caractérisé en ce que** le ou les modules logiciels comprimés (181) sont sélectionnés par un utilisateur ou un revendeur de l'appareil de télévision (1) et/ou le ou les modules logiciels comprimés (181), qui ont été enregistrés dans la mémoire non volatile (180) sous la forme de modules logiciels décomprimés et exécutables (182), sont effacés.

4. Procédé selon la revendication 3,
**caractérisé en ce que** tous les modules logiciels comprimés (181) sont effacés de la mémoire non volatile (180).

5. Procédé selon l'une des revendications précédentes,
**caractérisé en ce que** les modules logiciels comprimés (181) sont écrits par l'intermédiaire d'une interface dans une mémoire non volatile (180).

6. Appareil de télévision avec une entrée de signal (110), un tuner (115) et un étage de fréquence intermédiaire (120), grâce auquel un signal de télévision d'un émetteur déterminé peut être reçu, avec un circuit de traitement de signaux (125) pour le traitement d'un tel signal de télévision, afin que, aux sorties du circuit de traitement de signaux (125), un signal audio et un signal vidéo sont disponibles, avec un amplificateur de puissance (130) pour l'amplification du signal audio et un haut-parleur (140) pour la conversion du signal audio amplifié en un signal acoustique, avec un circuit de traitement de signaux (135) pour le traitement du signal vidéo et un affichage (145) pour la reproduction du signal vidéo traité, et avec un récepteur de télécommande (155) pour la commande de l'appareil de télévision 1, et l'appareil de télévision (1) comprenant une unité de commande (160) et comprenant une mémoire non volatile (180), dans laquelle plusieurs modules logiciels (181, 182) sont enregistrés, une partie des modules logiciels servant à la commande et à la surveillance du tuner (115), de l'étage de fréquence intermédiaire (120), du circuit de traitement de signaux (125), de l'amplificateur de puissance (130), du haut-parleur (140), du circuit de traitement des signaux vidéo (135), de l'affichage (145) et du récepteur de télécommande (155) par l'intermédiaire de l'unité de commande (160), et une autre partie des modules logiciels servant à d'autres fonctions de l'appareil de télévision (1) et/ou à la commande, la régulation et la surveillance de composants pouvant être ajoutés à l'appareil de télévision (1),
**caractérisé en ce qu'**une première partie des modules logiciels (181, 182) enregistrés dans la mémoire non volatile (180) sont enregistrés sous la forme de modules logiciels exécutables par l'unité de commande (160) et une deuxième partie des modules logiciels sont enregistrés sous la forme de modules comprimés, exécutables par l'unité de commande seulement après décompression, dans la mémoire non volatile et un protocole étant établi, dans l'appareil de télévision (1), en ce qui concerne la fréquence d'utilisation des modules logiciels exécutables (182) et la décompression et l'utilisation des modules logiciels comprimés (181) et il est en outre prévu, dans l'appareil de télévision (1), que :
a) les modules logiciels comprimés (181), qui sont détectés comme comprimés et utilisés plus souvent selon un critère prédéterminé, sont enregistrés sous forme décomprimée dans la mémoire non volatile, et/ou
b) les modules logiciels exécutable (182), qui sont détectés comme utilisés rarement ou jamais selon un critère prédéterminée, sont effacés de la mémoire non volatile (180).

7. Appareil de télévision selon la revendication 6,
**caractérisé en ce que** la mémoire non volatile (180) est une mémoire morte.

8. Appareil de télévision selon la revendication 6 ou 7,
**caractérisé en ce que** les logiciels enregistrés dans la mémoire non volatile (180) contiennent également des données pour l'exploitation de l'appareil de télévision et/ou également des instructions ou des commentaires pour un utilisateur de l'appareil de télévision.
